# EUROPEAN PATENT SPECIFICATION

(11) **EP 3 006 348 B1**
(45) Date of publication and mention of the grant of the patent: **01.03.2017**
(21) Application number: 14188511.1
(22) Date of filing: 10.10.2014
(51) Int. Cl.: B64F 1/34, B60K 15/073, B64F 1/36

(54) **Enhanced fuel tank for mobile ground power unit**
Verbesserter Treibstofftank fuer eine mobile Bodenversorgungseinheit
Reservoir d'essence amélioré pour unité mobile d'alimentation

(43) Date of publication of application: 13.04.2016
(73) Proprietor: Illinois Tool Works Inc., Glenview, IL 60025 (US)
(72) Inventor: Tindall, Leslie, Ashford, Kent TN23 1DZ (GB)
(74) Representative: Verbrugge, Vivien François Emeric

(56) References cited:
- CN-Y- 201 124 755
- DE-A1- 19 605 702
- DE-C1- 19 707 018
- FR-A1- 2 799 526
- US-A- 5 458 373
- US-A1- 2004 011 918
- US-A1- 2005 109 773

## Description

This invention relates to ground power units (GPU) for supplying power to an aircraft parked on the ground.

Such a ground power unit is disclosed in US 5,253,891 A. It usually comprises an engine, driving an electric generator, both inserted in a housing to protect it from environmental influences.

Also US2004/011918 A1, which comprises the features mentioned in the preamble of claim 1, discloses such a ground power unit.

The inventor found it very disadvantageous that it is difficult to get fresh, dry air to the generator for cooling the generator, because of the lack of space where the generator is usually located.

The object of the invention therefore was to provide fresh, dry air to the generator. This object is achieved by the subject matter of the independent claims; preferred embodiments are specified by the dependent claims.

Particularly, this object is achieved by a mobile ground power unit for supplying power to an aircraft parked on the ground, the ground power unit comprising
- an engine, which is preferably a combustion, particularly preferable diesel engine, and
- an electric generator, whereby the electric generator is configured to be driven by the engine,
- a housing whereby the engine and the electric generator are disposed within the housing,
- a fuel tank, wherein the fuel tank comprises a wall that forms at least one channel that allows air to pass from one side of the fuel tank to another side of the fuel tank. The object of the invention is also achieved by a fuel tank for a ground power unit wherein the ground power unit comprises
- an engine, which is preferably a combustion engine, and
- an electric generator, wherein the electric generator is configured to be driven by the engine,
- a housing whereby the engine and the electric generator are disposed within the housing,
wherein the fuel tank comprises a wall that forms at least one channel that allows air to pass from one side of the fuel tank to another side of the fuel tank.

Thereby, dry clean and cool air can be drawn from below the GPU without spending much more space for suitable ducting components, as the tank itself acts as a ducting component. As a very beneficial side effect, the inventor found out, that the air passing the fuel tank is cooling the fuel inside the fuel tank.

Preferably, the mobile ground power stands on wheels. Usually, it is equipped with a towing arm. The GPU is preferably set up to output 28 V of direct current and/or 115 V 400 Hz of alternating current. Preferably, the electric energy is carried from a generator to a connection on the aircraft via cables, for example a 3 phase 4-wire insulated cable capable of handling 261 A (90 kVA).

Preferably, the housing of the ground power unit is a component or group of components that surrounds the engine and/or the generator at least partially, particularly at the sides and/or the top of engine and/or generator. The housing is preferably the outer shell of the ground power unit.

The generator in a GPU requires dry, clean and cool air for cooling. A large volume of air is required which means that the precipitation can be drawn in if the intake opening is exposed to the weather. Another issue with modern diesel engines is keeping the fuel cool. Diesel fuel is used as a coolant to cool the injector pump and is returned warm to the fuel tank. The fuel returning from the injector pump gradually increases the temperature of the tank. If the fuel temperature exceeds the limits defined by the engine manufacturer then an additional fuel intercooler is required. By drawing the generator cooling air through a, preferably molded, duct in the fuel tank it is possible to remove heat from the fuel without having to add a separate cooler to the fuel circuit.

Preferably, the other side of the fuel tank is a side approximately perpendicular to the one side, particularly preferable it is the other side of the fuel tank is approximately parallel vis-à-vis the one side. Preferably, the tank is located below generator and engine.

In a further preferred embodiment of the GPU or the fuel tank according to the present invention, the fuel tank is rotor molded or rotor cast, or a rotor molded or rotor cast component, preferably out of plastic, e.g. Polyethylene.

One of the down sides of using polyethylene tanks is that the material insulates the fuel better than steel tanks and it is more likely that fuel coolers are required. However, by incorporating the channel into the fuel tank, this down side is compensated for and one can on the other side benefit from the advantages a rotor molded / cast component offers (e.g., low cost, impact resistance, chemical resistance, etc.). Therefore, one can use a rotor molded/cast tank, esp. Polyethylene tank, without increasing the fuel temperature.

Preferably, the channel is located in the tank at a position that is - when the tank is disposed inside the housing of the GPU - below and vis-à-vis the generator or below and at one side of the generator such that the generator is in between the channel and an ventilator and therefore and air stream will hit the generator. Particularly preferably, the channel is positioned precisely at a generator air intake.

In a further preferred embodiment according to the present invention the wall of the fuel tank is surrounding the channel except for an inlet opening and an outlet opening of the channel.

Thereby, the effective surface for cooling the fuel is high. The channel is completely passing through the tank which also provides for an advantageous air flow.

In a further preferred embodiment according to the present invention the channel has an inlet on the bottom side of the fuel tank and an outlet on the top side of the fuel tank.

Thereby, cool dry air is able to enter from below and to be drawn through the tank vertically. This enables an effective air flow with short flow distances.

Embodiments of the present invention will now be described - by way of example only - with reference to the accompanying drawings, whereby
Fig. 1 a is a sketch of a GPU according to the invention, having a fuel tank according the invention,
Fig. 2a-2f are drawings of a GPU according to the invention based on Fig. 1 a and incorporating as well many of the advantageous preferred features.

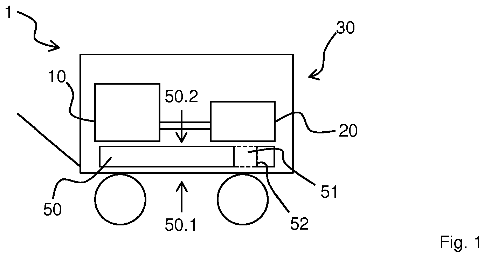

Fig. 1 is showing a side view of a GPU 1 according to the invention having a fuel tank 50 according the invention. The GPU 1 comprises an engine 10 and an electric generator 20. The electric generator 20 is configured to be driven by the engine 10. The GPU 1 comprises a housing 30 whereby the engine 10 and the electric generator 20 are disposed within the housing 30. The fuel tank comprises 50 a wall 51 that forms at least one channel 52 that allows air to pass from one side 50.1 of the fuel tank 50 to another side 50.2 of the fuel tank 50.

This allows having an air intake into the housing through the fuel tank 50, resulting in less space needed for this function and additional cooling of the fuel.

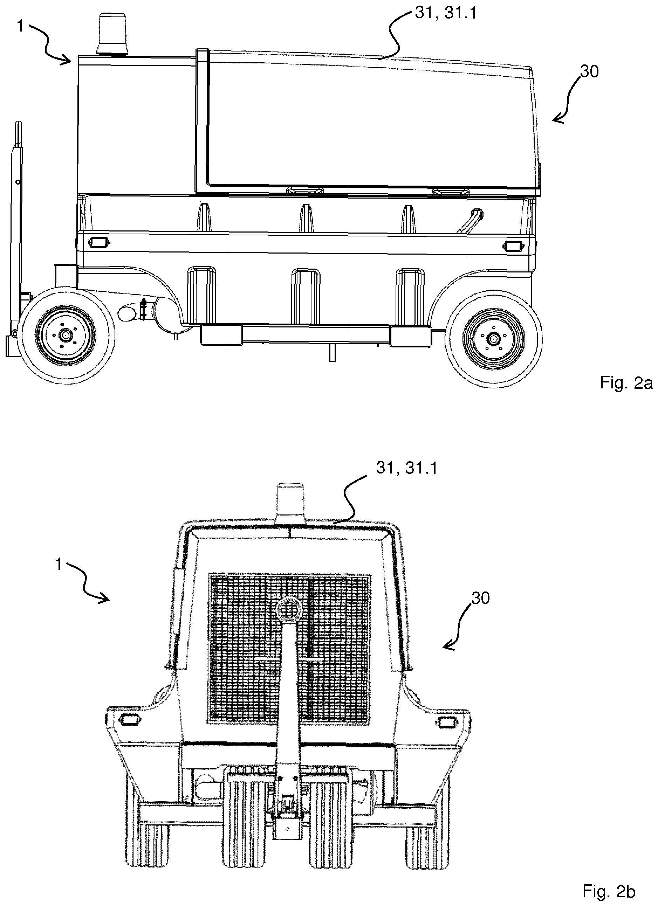

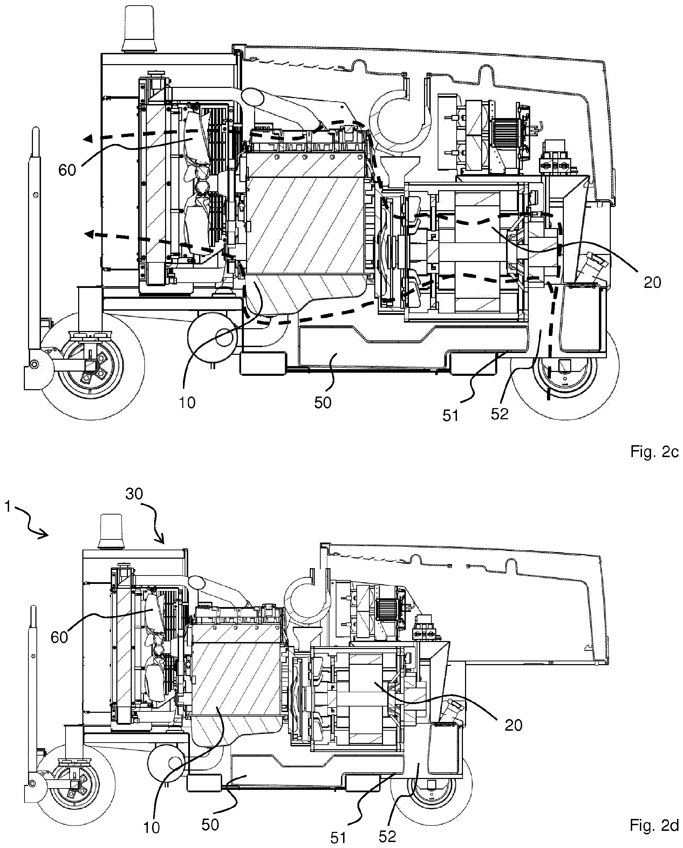

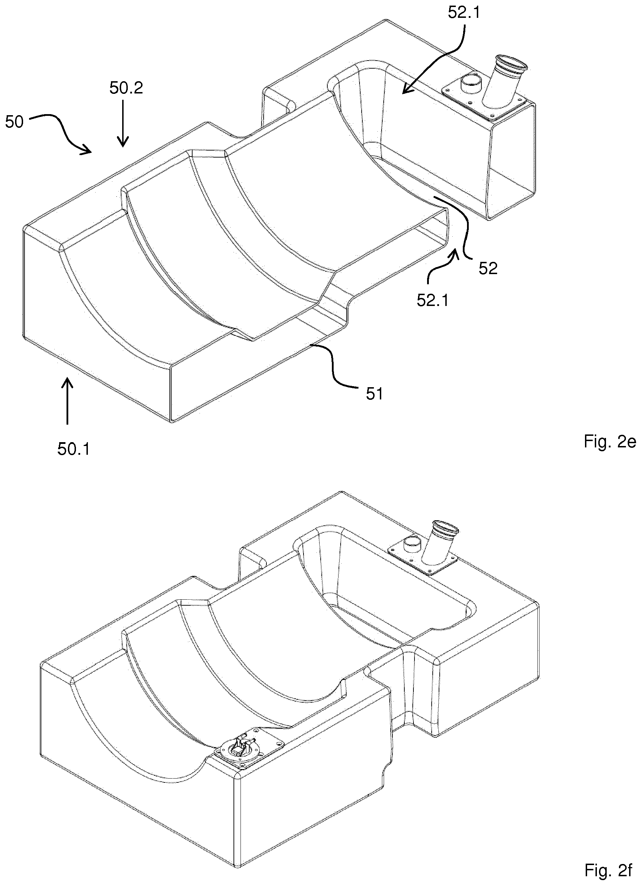

Fig. 2a-2f are showing a GPU 1 according to the invention based on Fig. 1 a and 1 b incorporating as well many of other advantageous preferred features. Fig. 2a is a side view, Fig. 2b a frontal view, Fig. 2c and d cross-sectional views, wherein in Fig. 2d, the canopy is retracted, Fig. 2e a section through the fuel tank and Fig. 2f the complete fuel tank.

The housing 30 features as a component 31 a canopy 31.1, which preferably is rotor molded or rotor cast, and which covers at least the upper side of the engine 10 and the generator 20.

The GPU 1 comprises a fuel tank 50 below generator and combustion engine, wherein the fuel tank 50 comprises a wall 51 that forms at least one channel 52 that allows air to pass from one side 50.1 of the tank to another side 50.2 of the fuel tank 50. The wall 51 of the fuel tank 50 is surrounding the channel 52 except for an inlet opening 52.1 and an outlet opening 52.2 of the channel 52. The channel 52 has an inlet on the bottom side of the fuel tank 50, which is the side 50.1, and an outlet on the top side of the fuel tank 50, which is the side 50.2. The channel 52 is located in the tank 50 at a position that is below and at one side of the generator 20 such that the generator 20 is in between the channel 52 and a ventilator 60 of the liquid cooling aggregate and therefore, an air stream will hit the generator 20. The channel 52 is furthermore positioned precisely at a generator 20 air intake. In Fig. 2c, the air flow due to the channel 22 is depicted by dashed arrows.

With this invention, a better fuel tank for a GPU is provided. Incorporating a channel through the fuel tank enhances the possibilities for better air circulation and it even helps cooling the fuel.

### Reference signs

- 1: ground power unit
- 10: engine
- 20: generator
- 30: housing
- 31: rotor molded or rotor cast component
- 31.1: canopy
- 50: fuel tank
- 50.1: one side of fuel tank
- 50.2: other side of fuel tank
- 51: wall
- 52: channel
- 52.1: inlet opening
- 52.2: outlet opening
- 60: ventilator of the liquid cooling aggregate

## Claims

1. Mobile ground power unit (1) for supplying power to an aircraft parked on the ground, the ground power unit (1) comprising
- an engine (10) and
- an electric generator (20), whereby the electric generator (20) is configured to be driven by the engine (10),
- a housing (30) whereby the engine (10) and the electric generator (20) are disposed within the housing (30),
- a fuel tank (50)
**characterized in that**
an air intake into the housing (30) through the fuel tank (50) is present, whereby therefor the fuel tank (50) comprises a wall (51) that forms at least one channel (52) that allows air to pass from one side (50.1) of the fuel tank (50) to another side (50.2) of the fuel tank (50).

2. Ground power unit (1) according to claim 1, wherein the fuel tank (50) is rotor molded or rotor casted.

3. Ground power unit (1) according to one of the previous claims, wherein the wall (51) of the fuel tank (50) is surrounding the channel (52) except for an inlet opening (52.1) and an outlet opening (52.2) of the channel (52).

4. Ground power unit (1) according to one of the previous claims, wherein the channel (52) has an inlet on the bottom side of the fuel tank (50) and an outlet on the top side of the fuel tank (50).

5. Method for operating a ground power unit (1) according to one of the previous claims, whereby
- air taken in by the air intake into the housing (30) through the fuel tank (50) is passed from one side (50.1) of the fuel tank (50) to another side (50.2) of the fuel tank (50) by the at least one channel (52).

## Patentansprüche

1. Mobile Bodenstromversorgungseinheit (1) zum Liefern von Strom an ein Luftfahrzeug, das am Boden geparkt ist, wobei die Bodenstromversorgungseinheit (1) Folgendes umfasst:
- einen Verbrennungsmotor (10) und
- einen Elektrogenerator (20), wobei der Elektrogenerator (20) dafür ausgelegt ist, von dem Verbrennungsmotor (10) angetrieben zu werden,
- ein Gehäuse (30), wobei der Verbrennungsmotor (10) und der Elektrogenerator (20) in dem Gehäuse (30) angeordnet sind,
- einen Kraftstofftank (50),
**dadurch gekennzeichnet, dass**
eine Luftansaugung in das Gehäuse (30) durch den Kraftstofftank (50) vorhanden ist, wobei der Kraftstofftank (50) daher eine Wand (51) umfasst, die mindestens einen Kanal (52) bildet, der es Luft ermöglicht, von einer Seite (50.1) des Kraftstofftanks (50) zu einer anderen Seite (50.2) des Kraftstofftanks (50) hindurchzugehen.

2. Bodenstromversorgungseinheit (1) nach Anspruch 1, wobei der Kraftstofftank (50) schleudergeformt oder schleudergegossen ist.

3. Bodenstromversorgungseinheit (1) nach einem der vorhergehenden Ansprüche, wobei die Wand (51) des Kraftstofftanks (50) den Kanal (52) umgibt, mit Ausnahme einer Einlassöffnung (52.1) und einer Auslassöffnung (52.2) des Kanals (52).

4. Bodenstromversorgungseinheit (1) nach einem der vorhergehenden Ansprüche, wobei der Kanal (52) einen Einlass an der Unterseite des Kraftstofftanks (50) und einen Auslass auf der Oberseite des Kraftstofftanks (50) aufweist.

5. Verfahren zum Betrieb einer Bodenstromversorgungseinheit (1) nach einem der vorhergehenden Ansprüche, wobei
- Luft, die von der Luftansaugung in das Gehäuse (30) durch den Kraftstofftank (50) angesaugt wird, von einer Seite (50.1) des Kraftstofftanks (50) zu einer anderen Seite (50.2) des Kraftstofftanks (50) durch den mindestens einen Kanal (52) hindurchgeht.

## Revendications

1. Groupe électrogène de parc mobile (1) destiné à alimenter en électricité un aéronef stationné au sol, le groupe électrogène de parc (1) comprenant
- un moteur (10) et
- un générateur électrique (20), le générateur électrique (20) étant configuré pour être entraîné par le moteur (10),
- un carter (30), le moteur (10) et le générateur électrique (20) étant placés à l'intérieur du carter (30),
- un réservoir de carburant (50)
**caractérisé en ce que**
une admission d'air dans le carter (30) à travers le réservoir de carburant (50) est présente, le réservoir de carburant (50) comprenant à cet effet une paroi (51) formant au moins un passage (52) permettant la circulation d'air depuis un côté (50.1) du réservoir de carburant (50) jusqu'à un autre côté (50.2) du réservoir de carburant (50).

2. Groupe électrogène de parc (1) selon la revendication 1, dans lequel le réservoir de carburant (50) est moulé par rotation ou coulé par rotation.

3. Groupe électrogène de parc (1) selon l'une des revendications précédentes, dans lequel la paroi (51) du réservoir de carburant (50) entoure le passage (52) à l'exception d'une ouverture d'entrée (52.1) et d'une ouverture de sortie (52.2) du passage (52).

4. Groupe électrogène de parc (1) selon l'une des revendications précédentes, dans lequel le passage (52) comporte une entrée sur le dessous du réservoir de carburant (50) et une sortie sur le dessus du réservoir de carburant (50).

5. Procédé pour faire fonctionner un groupe électrogène de parc (1) selon l'une des revendications précédentes, consistant à :
- faire circuler de l'air admis par l'admission d'air dans le carter (30) à travers le réservoir de carburant (50) depuis un côté (50.1) du réservoir de carburant (50) jusqu'à un autre côté (50.2) du réservoir de carburant (50) au moyen de l'au moins un passage (52).
